# EUROPÄISCHE PATENTSCHRIFT

(11) **EP 0 617 069 B1**
(45) Veröffentlichungstag und Bekanntmachung des Hinweises auf die Patenterteilung: **02.11.2000**
(21) Anmeldenummer: 94103857.2
(22) Anmeldetag: 14.03.1994
(51) Int. Cl.: C08G 59/12, C08G 59/50, C09D 5/03, C09D 163/00

(54) **Härtbare, pulverförmige Mischungen**
Curable, powdery mixtures
Mélanges durcissables sous forme de poudre

(30) Priorität: 22.03.1993 DE 4309196
(43) Veröffentlichungstag der Anmeldung: 28.09.1994
(73) Patentinhaber: HOECHST AKTIENGESELLSCHAFT, 65926 Frankfurt am Main (DE)
(72) Erfinder: Marten, Manfred, D-55126 Mainz-Finthen (DE); Fink, Dietmar, D-65232 Taunusstein (DE); Godau, Claus, D-65399 Kiedrich (DE)
(74) Vertreter: Zounek, Nikolai, Dipl.-Ing.

(56) Entgegenhaltungen:
- EP-A- 0 199 292
- EP-A- 0 387 692
- EP-A- 0 462 840
- FR-A- 2 202 138
- GB-A- 1 174 873
- GB-A- 1 462 538
- US-A- 3 629 204
- CHEMICAL ABSTRACTS, vol. 85, no. 24, 13. Dezember 1976, Columbus, Ohio, US; abstract no. 179143d, 'Weather-ressistant epoxy resins' Seite 84 ; & JP-A-75 153 097 (DOW CHEMICALS) 3. Juni 1974

## Beschreibung

Pulverlacke werden u. a. zum Beschichten von Metallmöbeln, wie Campingartikeln, Kühlschränken, Gartenmöbeln, Regalen sowie zum Lackieren von Kleingegenständen und kompliziert geformten Werkstücken, von Fahrrädern, Nähmaschinen und anderen Metallgegenständen verwendet. Größtenteils werden dabei metallische Gegenstände lackiert, aber auch beispielsweise Kunststoffe sind mit der Pulverlacktechnologie lackierbar.

Gegenüber anderen Lackierverfahren hat die Pulverlacktechnologie eine Reihe von Vorteilen. So arbeitet dieses Lackierverfahren lösungsmittelfrei und damit umweltfreundlich und kostengünstiger. Auch hinsichtlich der Entsorgung, Arbeitssicherheit (Abwesenheit brennbarer Lösungsmittel), Arbeitshygiene und des Umweltschutzes ist das Verfahren vorteilhaft. Darüber hinaus entfallen die Antrocknungszeiten der Lackschichten. Der lackierte Gegenstand wird direkt zum Einbrennofen befördert, wodurch der Zeitaufwand für den gesamten Lackiervorgang reduziert wird.

Neben der Herstellung von Überzügen können Pulverharze auch als Klebstoffe eingesetzt werden. Dies ist dann vorteilhaft, wenn zum Beispiel unporöse Werkstoffe wie Metalle verklebt werden müssen, aus denen flüchtige Bestandteile nicht mehr entweichen können.

Aber auch bei der Verarbeitung von porösen Werkstoffen werden in zunehmendem Maße Klebstoffsysteme bevorzugt, die lösungsmittelfrei sind und keine Spaltprodukte abgeben. Diese Voraussetzungen werden von Klebstoffen auf Epoxidharzbasis erfüllt.

Unter den wärmehärtbaren Pulverlacksystemen werden überwiegend Epoxidharzkombinationen eingesetzt. Diese Epoxidharze werden mit Härtern z.B mit Aminen, Polyamiden, Säureanhydriden, Bortrifluoridkomplexen oder Dicyandiamid gemischt. Viele dieser Mischungen haben Nachteile, die ihre technische Verwendung einschränken. So werden beispielsweise Gemische aus Polyepoxiden und aliphatischen Aminen ziemlich rasch fest und man ist daher gezwungen, die Bestandteile erst kurz vor dem Verbrauch zu mischen und rasch zu verwenden, bevor der Härtungsprozeß einsetzt. Durch Verwendung von aromatischen Aminen kann die Verarbeitungszeit verlängert werden, jedoch sind dann wieder zum Härten höhere Temperaturen und längere Zeiten nötig. Außerdem treten bei den Härtungstemperaturen Vergilbungserscheinungen auf.

Aus DE-22 48 776 und DE-27 31 335 ist die Verwendung von Imidazolin-Derivaten als Härter für Pulverlacke auf der Basis von Epoxidharzen bekannt. DE-23 24 696 beschreibt die Verwendung von Salzen aus Polycarbonsäuren und Imidazolin-Derivaten für den gleichen Zweck. Auch die Verwendung von Addukten aus Epoxiden und Imidazolverbindungen als Härter für Pulverlacke ist bekannt (DE-19 10 758). In EP 387 692 sind Pulverlacke auf der Basis von mit aromatischen Dicarbonsäuren modifizierten Polyepoxiden beschrieben, die mit Carboxylgruppen enthaltenden Polyestern gehärtet werden.

Aufgrund von Umweltaspekten sowie aus wirtschaftlichen Überlegungen werden heute lösungsmittel- und spaltproduktfreie Beschichtungs- und Klebstoffe benötigt, die extrem schnell verarbeitet werden können.

In der Praxis hat sich nun gezeigt, daß für viele Anwendungszwecke die Härtungszeit der Pulvermischungen nach dem Stand der Technik zu lange ist, da die bekannten Pulvermischungen und Verfahren keine ausreichend hohe Reaktivität aufweisen. Die Pulverlackmischung soll also bei möglichst niedriger Temperatur in kürzester Zeit aushärten. Darüberhinaus wird außerdem eine gute Lagerstabilität verlangt.

Es wurde nun überraschenderweise gefunden, daß durch die Verwendung von speziellen Epoxidverbindungen Pulvermischungen hergestellt werden können, die lagerstabil sind und die eine deutlich höhere Reaktivität aufweisen als die nach dem Stand der Technik bekannten Pulverharzsysteme. Dies gilt insbesondere auch gegenüber den Pulverlacken nach EP 387 692.

Die vorliegende Erfindung betrifft härtbare, pulverförmige Mischungen, enthaltend
A) ein Epoxidharz mit einer zahlenmittleren molaren Masse ***M***ₙ von 500 bis 10 000 g/mol und einer Glasübergangstemperatur von mindestens 20 °C, erhältlich durch Umsetzung von
A1) aromatischen Verbindungen mit mindestens zwei 1,2-Epoxidgruppen pro Molekül und Epoxid-Äquivalentgewichten von 160 bis 600, und
A2) aromatischen Dicarbonsäuren oder deren Mischung mit Verbindungen aus der Gruppe der (cyclo-)aliphatischen Dicarbonsäuren, Monocarbonsäuren und/oder einwertigen Phenolen, und gegebenenfalls
A3) cyclischen Anhydriden, und
B) einen Härter, wobei Carboxylgruppen enthaltende Polyester als Härter ausgenommen sind.

Die erfindungsgemäß eingesetzten Epoxidverbindungen A) enthalten im Durchschnitt mindestens 2 Epoxidgruppen pro Molekül. Das Epoxidäquivalentgewicht liegt im allgemeinen zwischen 300 und 1 200, vorzugsweise zwischen 400 und 800 und insbesondere zwischen 450 und 700, während die Säurezahl zumeist 0,01 bis 20, vorzugsweise 0,01 bis 2 mg KOH/g beträgt. Weiterhin besitzen die Epoxide A) mittlere Molekulargewichte Mₙ (Zahlenmittel; bestimmt durch Gelchromatographie) von 500 bis 10 000, vorzugsweise von 800 bis 3 000. Je nach Ausgangskomponenten A1), A2) und ggf. A3) und deren Molverhältnis sowie dem Molekulargewicht von A) handelt es sich bei diesen Epoxidverbindungen um feste Produkte mit Glasübergangstemperaturen (Tg) von mindestens 20 °C, vorzugsweise von mindestens 35 bis 60 °C.

Die Herstellung der Epoxidverbindungen A) erfolgt in bekannter Weise durch Umsetzung der Verbindungen A1) mit den Säuren oder den Säuregemischen gemäß A2), z.B. durch mehrstündiges Erhitzen der Komponenten unter Ausschluß von Sauerstoff auf Temperaturen von 100 bis 250 °C, vorzugsweise 140 bis 180 °C, zweckmäßigerweise in Gegenwart eines Katalysators.

Bei Mitverwendung der Komponente A3) wird die Herstellung in der Regel in zwei Stufen durchgeführt. Hierzu wird in der ersten Stufe zunächst wie vorstehend beschrieben verfahren, wobei im allgemeinen ein Produkt mit Säurezahlen von kleiner als 20 mg KOH/g, vorzugsweise kleiner als 2 mg KOH/g angestrebt wird. Danach wird in einer zweiten Stufe das Reaktionsprodukt von A1) und A2) mit dem cyclischen Anhydrid A3) durch mehrstündiges Erhitzen der Komponenten unter Ausschluß von Sauerstoff auf Temperaturen von 100-200 °C, vorzugsweise 120-160 °C bis zum Erreichen einer Säurezahl von kleiner als 5 mg KOH/g, vorzugsweise kleiner als 2 mg KOH/g, umgesetzt.

Die erfindungsgemäß als Komponente A1) eingesetzten aromatischen 1,2-Epoxidverbindungen haben im Mittel mindestens zwei 1,2-Epoxidgruppen pro Molekül, stellen also Polyepoxidverbindungen dar, und haben in der Regel eine Glasübergangstemperatur von mindestens 10 °C. Sie können auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen oder ähnliche.

Derartige Polyepoxidverbindungen A1) sind z.B. solche auf Basis mehrwertiger Phenole, beispielsweise aus Resorcin, Hydrochinon, aus 4,4'-Dihydroxydiphenylmethan, aus Isomerengemischen des Dihydroxydiphenylmethans (Bisphenol F), aus 4,4'-Dihydroxy-3,3'-dimethyl-diphenylmethan, aus 4,4'-Dihydroxy-diphenyldimethylmethan (Bisphenol A), aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus 4,4'-Dihydroxybenzophenon, Bis-(4'-hydroxyphenyl)-1,1-isobutan, Bis-(4'-hydroxy-tert.butylphenyl)-2,2-propan, Bis-(2-hydroxynaphthyl)-methan, 1,5-Dihydroxynaphthalin, Bis-(4-hydroxyphenyl)-ether; ferner aus den Chlorierungs- und Bromierungsprodukten der vorstehend genannten Verbindungen, aus Novolaken (d.h. aus Umsetzungsprodukten von ein- oder mehrwertigen Phenolen mit Aldehyden, insbesondere Formaldehyd in Gegenwart saurer Katalysatoren).

Weiter kommen als A1)
in Frage Polyglycidylester von Polycarbonsäuren, erhältlich durch die Umsetzung von Epichlorhydrin oder ähnlichen Epoxyverbindungen mit einer aromatischen Polycarbonsäure, wie Terephthalsäure und 2,6-Naphthalindicarbonsäure. Ein Beispiel hierfür ist Terephthalsäurediglycidylester.

Diese Polyepoxidverbindungen können auch in Mischung untereinander sowie ggf. auch in Mischung mit Monoepoxiden eingesetzt werden, wobei zu beachten ist, daß die Mischung der 1,2-Epoxidverbindungen eine Glasübergangstemperatur von mindestens 10 °C besitzt. Verwendet man in der Mischung 1,2-Epoxidverbindungen mit niedrigeren Glasübergangstemperaturen, so können diese nur zu einem geringen Anteil und nur in Kombination mit entsprechend hochschmelzenden 1,2-Epoxid verbindungen eingesetzt werden, damit die Glasübergangstemperatur der Komponente A) mindestens 10 °C beträgt.

Als Monoepoxide sind beispielsweise geeignet: Epoxidierte einfach-ungesättigte Kohlenwasserstoffe (Butylen-, Cyclohexen-, Styroloxid), halogenhaltige Epoxide,
wie z.B. Epichlorhydrin; Epoxidether einwertiger Alkohole (Methyl-, Ethyl-, Butyl-, 2-Ethylhexyl-, Dodecylalkohol); Epoxidether einwertiger Phenole (Phenol, Kresol sowie andere in o- oder p-Stellung substituierte Phenole); Glycidylester ungesättigter Carbonsäuren, epoxidierte Ester von ungesättigten Alkoholen bzw. ungesättigten Carbonsäuren sowie die Acetale des Glycidaldehyds.

Weitere Epoxidverbindungen mit geeigneten Auf schmelzpunkten sind in dem Handbuch "Epoxidverbindungen und Epoxidharze" von A.M. Paquin, Springer Verlag, Berlin 1958, Kapitel IV, in Lee, Neville "Handbook of Epoxy Resins", 1967, Chapter 2 und in Wagner/Sarx, "Lackkunstharze", Carl Hanser Verlag (1971), S. 174 ff. beschrieben.

Bevorzugte Epoxidverbindungen A1) sind:
- Umsetzungsprodukte von Epihalogenhydrinen, wie Epichlorhydrin mit monomeren mehrwertigen Phenolen wie 2,2-Bis(4'-hydroxyphenyl)propan, 1,1-Bis(4'-hydroxyphenyl)-äthan, Bis(4-Hydroxyphenyl)-methan, 4,4'-Dihydroxydiphenylsulfon, Hydrochinon, Resorcin, Dihydroxydiphenyl, Dihydroxynaphthalin;
- Glycidyläther von mehrwertigen phenolischen Verbindungen wie Novolaken und Resolen, gewonnen aus der Kondensation des Phenols und/oder der Kresole mit Formaldehyd;
- Polyglycidylester von Polycarbonsäuren wie Diglycidylester der Phthalsäure, Isophthalsäure, Terephthalsäure, aus aromatischen Polyestern abgeleitete Polyglycidylester oder auch aromatische Verbindungen mit freien Carbonsäuregruppen.

Besonders bevorzugt werden als A1) Epoxidharze auf Basis von Bisphenol A und Epichlorhydrin mit Epoxidäquivalentgewichten im Bereich von 160-600, vorzugsweise 160-200, verwendet.

Die Verbindungen A2) stellen aromatische Dicarbonsäuren oder Mischungen dieser aromatischen Dicarbonsäuren mit (cyclo)aliphatischen Dicarbonsäuren, Monocarbonsäuren und/oder einwertigen Phenolen dar.

Als aromat. Dicarbonsäuren werden z.B. verwendet: Terephthalsäure, Isophthalsäure, o-Phthalsäure oder verschiedene Naphthalindicarbonsäuren, beispielsweise 2,6-Naphthalindicarbonsäure. Besonders bevorzugt ist dabei Terephthalsäure. Es können auch Gemische der aromatischen Dicarbonsäuren eingesetzt werden.

Weitere geeignete aromatische Carbonsäuren sind solche des Typs 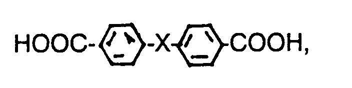 wobei X für eine chemische Bindung, für Alkylenreste mit 1 bis 6 C-Atomen, für O, SO₂ oder CO steht.

Der Begriff "(cyclo)aliphatische" Dicarbonsäuren soll entsprechende aliphatische oder cycloaliphatische Säuren sowie deren Gemische umfassen.

Als aliphatische Dicarbonsäuren, deren aliphatischer Rest im allgemeinen 1 bis 20, vorzugsweise 2 bis 12 C-Atome enthält, seien beispielsweise Bernsteinsäure, Glutarsäure, Adipinsäure, Korksäure, Azelainsäure, Sebacinsäure und Dodecandisäure genannt.

Geeignete cycloaliphatische Carbonsäuren, deren cycloaliphatischer Rest zumeist 5 bis 12, vorzugsweise 6 bis 8 C-Atome umfaßt, sind z.B. die verschiedenen Cyclohexandicarbonsäure-Isomeren, Hexahydrophthalsäure und Tetrahydrophthalsäure.

Geeignete Monocarbonsäuren, deren C-Zahl im allgemeinen 3 bis 20, vorzugsweise 3 bis 12 beträgt, sind z.B.: Benzoesäure, α- bzw. β-Naphthoesäure, o,m,p-Toluylsäure, Anissäure, Veratrumsäure; weiterhin verzweigte oder unverzweigte aliphatische Monocarbonsäuren, wie z.B. Essigsäure, Propionsäure, Buttersäure, Laurinsäure, Stearinsäure, Isooctansäure, Isononansäure, Trialkylessigsäure z.B. Neosäure C5 (2,2-Dimethylpropionsäure), Neosäure C10 oder Hydroxymonocarbonsäuren, wie Glykolsäure, Milchsäure, Dimethylolpropionsäure.

Die einwertigen Phenole können ein- oder mehrkernig sein. Beispielsweise seien hier genannt: Phenol, o, m, p-Kresol, Xylenole, Guajakol, Thymol, Carvacrol, α- oder β-Naphthol, p-t-Butylphenol u.dgl..

Falls die Komponente A2) eine Mischung aus aromatischer Dicarbonsäure mit (cyclo)aliphatischen Dicarbonsäuren, Monocarbonsäuren und/oder aromatischen Alkoholen darstellt, so beträgt die Menge dieser neben der aromatischen Dicarbonsäure vorhandenen Bestandteile zumeist 0,1 bis 20 Gew.-%, vorzugsweise 1 bis 5 Gew.-%, bezogen auf aromatische Dicarbonsäure.

Die Komponenten A1) und A2) werden üblicherweise in solchen Mengen eingesetzt, daß das Äquivalentverhältnis Epoxid- zu Carboxylgruppen 6 : 5 bis 2 : 1, vorzugsweise 3 : 2 bis 2 : 1 beträgt. Bei Mitverwendung von A3) werden pro Mol Reaktionsprodukt aus A1) und A2) im allgemeinen 0,01-1 Mol, vorzugsweise 0,1-0,4 Mol cyclisches Anhydrid A3) verwendet.

Als cyclische Polycarbonsäureanhydride A3) kommen zweckmäßigerweise solche in Frage, die 4 bis 20, vorzugsweise 4 bis 10 C-Atome aufweisen, und die gegebenenfalls noch Substituenten, wie Halogen, insbesondere Chlor, sowie Carboxylgruppen tragen können. Sie können sich vom (cyclo)-aliphatischen, olefinisch ungesättigten oder aromatischen Polycarbonsäuren ableiten. Beispielsweise seien hier genannt: Bernsteinsäureanhydrid, Alkenylbernsteinsäureanhydride wie z.B. Dodecenylbernsteinsäureanhydrid, Glutarsäureanhydrid, Maleinsäureanhydrid, Citraconsäureanhydrid (Methylmaleinsäureanhydrid), Dichlormaleinsäureanhydrid, Aconitsäureanhydrid (1-Propen-1,2,3-tricarbonsäure-1,2-anhydrid), Tricarballylsäureanhydrid (Propan-1,2,3-tricarbonsäureanhydrid), Itaconsäureanhydrid (Methylenbernsteinsäureanhydrid), Cyclopentantetracarbonsäuredianhydrid, Δ⁴-Tetrahydrophthalsäureanhydrid, 4-Methyl- Δ⁴-Tetrahydrophthalsäureanhydrid, Hexahydrophthalsäureanhydrid, 4-Methylhexahydrophthalsäureanhydrid, 3,6-Endomethylen-Δ⁴-tetrahydrophthalsäureanhydrid (=Nadicanhydrid),4-Methyl-3,6-endomethylen-Δ⁴-tetrahydrophthalsäureanhydrid (=Methylnadicanhydrid); 3,4,5,6,7,7-Hexachlor-3,6-endomethylentetrahydrophthalsäureanhydrid (=Chlorendicsäureanhydrid), das DielsAlder-Addukt aus 2 Mol Maleinsäureanhydrid und 1 Mol 1,4-Bis-(cyclopentadienyl)-2-buten oder Diels-Alder-Addukte aus Maleinsäureanhydrid und konjugiert ungesättigten Fettsäuren, wie 2,4-Hexadiensäure (Sorbinsäure), 9,11-Octadecadiensäure (Ricinensäure), 9,11,13-Octadecatriensäure (Eleostearinsäure), 9,11,13,14-Octadecatetraensäure, ferner aromatische Polycarbonsäureanhydride, wie Phthalsäureanhydrid, Trimellitsäureanhydrid, Pyromellitsäureanhydrid oder Benzophenontetracarbonsäureanhydrid. Man kann aber auch andere carboxycyclische Ringe enthaltende cyclische Anhydride von Polycarbonsäuren verwenden, deren Carboxylgruppen sich an verschiedenen ggf. anellierten Ringen befinden, wie beispielsweise 1,8-Naphthalindicarbonsäureanhydrid.

Besonders bevorzugt sind Bernsteinsäureanhydrid, Phthalsäureanhydrid und die durch Diels-Alder-Addition aus billigen petrochemischen Rohstoffen zugänglichen cycloaliphatischen Dicarbonsäureanhydride, wie z.B. Δ⁴-Tetrahydrophthalsäureanhydrid oder Hexahydrophthalsäureanhydrid.

Für die gezielte und beschleunigte Umsetzung der Carboxylgruppen der Komponente A2) und der Epoxidgruppen der Komponente A1) können als Katalysatoren beispielsweise eingesetzt werden: Natriumhydroxid, Kaliumhydroxid, Lithiumhydroxid, Natriumcarbonat, Chromverbindungen wie CrCl₃, CrO₃, Chromacetylacetonat, Imidazole, quaternäre Ammonium- und Phosphoniumverbindungen wie Benzyltrimethylammoniumchlorid, Tetraethylammoniumchlorid, Tetramethylammoniumchlorid, Benzyldodecyldimethylammoniumchlorid, Methyltriphenylphosphoniumjodid, Triphenyl-(2,5-dihydroxyphenyl)-phosphonium-hydroxid, Ethyltriphenylphosphoniumacetat, Triphenylethylphosphoniumbromid sowie organ. Phosphane wie Triphenylphosphan, Tricyclohexylphosphan, Tributylphosphan, Cyclohexyloctylphosphan, weiterhin aromatische Amine, wie N,N-Dimethylanilin, N,N-Diethylanilin, N,N-Dimethyl-p-toluidin, N,N-Diethyl-p-toluidin, sowie Amine wie Triethylamin, Tributylamin, Benzyldimethylamin, Benzyldiethylamin, Triethylendiamin, N-Methylmorpholin, N-Methyl-piperidin, N-Alkylamine wie z.B. N-Butylamin, und Alkanolamine wie Diethanolamin, Dimethylethanolamin, Diethylethanolamin, Dibutylethanolamin, Methyldiethanolamin, Di(3-phenoxy-2-hydroxy-propyl-alkylamine, wie z.B. Di-(3-phenoxy-2-hydroxy-propyl)-n-butylamin. Bevorzugt sind hierbei Verbindungen der Formel (I) 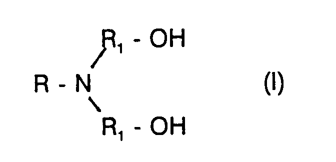 in der bedeuten
- R =: Wasserstoff; unverzweigter oder verzweigter Alkylrest mit 1 bis 18, vorzugsweise 1 bis 4 C-Atomen; cycloaliphatischer Alkylrest mit 5 bis 12, vorzugsweise 5 bis 8 C-Atomen oder gleich -R₁OH;
- R₁ =: unverzweigter oder verzweigter Alkylenrest mit 2 bis 6, vorzugsweise 2 oder 3 C-Atomen, der zusätzlich Substituenten -OR₂ tragen kann, wobei R₂ = R₁ oder ein subst. oder unsubst. aromatischer Ring bedeutet.

Besonders bevorzugte Vertreter dieser Formel (I) sind Triisopropanolamin und/oder Triethanolamin.

Diese Katalysatoren werden im allgemeinen in Mengen von 0,01 bis 1 %, vorzugsweise 0,05 bis 2 %, bezogen auf die Summe von A1) und A2), eingesetzt.

Diese Reaktionsprodukte aus A1) und A2) und ggf. A3) können auch in Abmischung mit den bekannten Epoxidharzen, z.B. auf Basis von Bisphenol-A oder Bisphenol-F verwendet werden.

Als Härtungsmittel B) kommen ganz allgemein alle zu diesem Zweck bekannten Verbindungen in Frage, insbesondere Anhydrid-Härter wie zum Beispiel: Phthalsäureanhydrid,Tetrahydrophthalsäureanhydrid, 4-Methyl-tetrahydrophthalsäureanhydrid, Hexahydrophthalsäureanhydrid, 4-Methylhexahydrophthalsäureanhydrid, Methylnadicanhydrid (Trivialname für Isomere des Methylendomethylentetrahydrophthalsäureanhydrids), Chlorendicsäureanhydrid (3,4,5,6,7,7-Hexachlor-3,6-endomethylentetrahydrophthalsäureanhydrid), Pyromellitsäuredianhydrid, Benzophenontetracarbonsäuredianhydrid, Trimellitsäureanhydrid, Härter entsprechend der Komponente B) aus DE 25 56 182, Dodecenylbernsteinsäureanhydrid, Isooctenylbernsteinsäureanhydrid u.a., Dicyandiamid, das z.B. unter der Markenbezeichnung Dyhard von SKW Trostberg hergestellt wird, Phenolische Härtungsmittel wie z.B. die Dow-Härter D.E.H. 80, D.E.H. 82, D.E.H. 84, Carbonsäuresalze von Imidazol- oder Imidazolinverbindungen, schmelzbare, lösliche Addukte, die durch Umsetzung einer Epoxidverbindung mit Imidazol-oder Imidazolinverbindungen oder deren Carbonsäuresalze erhalten werden (vgl. DE PS 19 10 758). Ausgenommen als Härter sind Carboxylgruppen enthaltende Polyester.

Bevorzugt als Härter sind Imidazoline oder Imidazole, insbesondere solche der Formel (I) 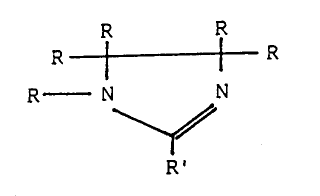 worin R unabhängig voneinander Wasserstoff oder ein Alkyl-, Aryl-, Aralkyl-, Cycloalkyl- oder heterocyclischen Rest, R' gleich R oder ein Alkylen- oder Arylen-Rest, der gegebenenfalls mit einem oder mehreren Alkyl-, Aryl-, Aralkyl-, Cycloalkyl- oder heterocyclischen Resten substituiert sein kann und wobei mehrere Reste, gegebenenfalls auch durch Heteroatome verbunden sein können und/oder der Formel (II) 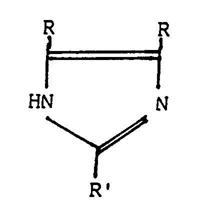 worin R und R' die gleiche Bedeutung haben wie in Formel (I).

Im einzelnen kommen als Imidazoline beispielsweise folgende Verbindungen in Frage: 2-Methyl-imidazolin, 2-Äthyl-4-methyl-imidazolin, 2-Phenylimidazolin, 2-Undecylimidazolin, 2-Heptadecylimidazolin, 2-Äthylimidazolin, 2-Isopropylimidazolin, 2,4-Dimethyl-imidazolin, 2-Phenyl-4-methyl-imidazolin, 2-Benzylimidazolin, 2-(o-Tolyl)-imidazolin, 2-(p-Tolyl)-imidazolin, Tetramethylen-bis-imidazolin, 1,1,3-Trimethyl-1,4-tetramethylen-bis-imidazolin, 1,3,3-Trimethyl-1,4-tetramethylen-bis-imidazolin, 1,1,3-Trimethyl-1,4-tetramethylen-bis-4methyl-imidazolin, 1,2-Phenylen-bis-imidazolin, 1,3-Phenylen-bis-imidazolin, 1,4-Phenylen-bis-imidazolin, 1,4-Phenylen-bis-4-methylimidazolin. Es können auch beliebige Mischungen der Imidazoline eingesetzt werden.

Geeignete Imidazole sind z.B. Imidazol selbst, 1-Methyl-imidazol, 2-Methyl-imidazol, 4-Methyl-imidazol, 5-Methylimidazol, 1-Äthyl-imidazol, 2-Äthyl-imidazol, 1-Propyl-imidazol, 2-Propyl-imidazol,
2-Isopropyl-imidazol, 1-Butyl-imidazol, 2-Octyl-imidazol, 2-Undecyl-imidazol, 2-Heptadecyl-imidazol, 2-Cyclohexyl-imidazol, 1-Phenyl-imidazol, 2-Phenylimidazol, 2,4-Dimethyl-imidazol, 1,2-Dimethyl-imidazol, 4,5-Dimethyl-imidazol, 2-Äthyl-4-methyl-imidazol, 1-Äthyl-2-methyl-imidazol, 1-Methyl-2-isopropyl-imidazol, 4-Butyl-5-äthyl-imidazol, 2-Cyclohexyl-4-methyl-imidazol, 1-Benzyl-2-methyl-imidazol, 2-Phenyl-4-methyl-imidazol, 4,5-Diphenyl-imidazol, 2-Äthyl-4-phenyl-imidazol, 2,4,5-Trimethyl-imidazol, 2,4,5-Tricyclohexyl-imidazol, 1,2,4,5-Tetramethylimidazol sowie Benzimidazole und deren Derivate. Es können auch beliebige Mischungen der Imidazole eingesetzt werden.

Die Menge der Härtungsmiftel in den erfindungsgemäßen pulverförmigen Mischungen hängt von der Art des Härtungsmittels ab und kann in weiten Grenzen schwanken. Im allgemeinen beträgt die Menge an Härtungsmittel 0,01 bis 60, vorzugsweise 0,5 bis 40 Gew.-%, bezogen auf die Summe der beiden Komponenten A) und B).

Die erfindungsgemäßen Mischungen können zusätzlich die bei Pulverlacken üblichen Zusatzstoffe enthalten, wie Verlaufmittel bzw. Antikratermittel, Farbstoffe, Pigmente, Füllstoffe, Mattierungsmittel, Thixotropiermittel, Entlüftungsmittel, UV-Stabilisatoren, Oxidationsinhibitoren, Quencher (Radikalfänger, wie zum Beispiel N-alkylsubstituierte Piperidine), Katalysatoren zur Beschleunigung der Vernetzungsreaktion, Weichmacher, zusätzliche Härter und zusätzliche härtbare Harze. Diese Zusatzstoffe werden im allgemeinen in Mengen von 0 bis 50, vorzugsweise 0,1 bis 40 Gew.-%, bezogen auf die Gesamtpulverlackmischung, eingesetzt. Eventuell flüssige oder pastöse Zusatzstoffe können dabei u. a. in Mischung mit hochaktiver Kieselsäure als Master Batch (siehe DE 22 02 907) zur Anwendung kommen.

Als Verlaufmittel können zum Beispiel Acetale, wie Polyvinylformal, Polyvinylacetal, Polyvinylbutyral, Polyvinylacetobutyral u. a., Polyäthylen- und Polypropylenglykole, Siliconharze, Gemische von Zinkseifen, von Fettsäuren und aromatischen Carbonsäuren, insbesondere handelsübliche Produkte auf Basis von Polyacrylaten eingesetzt werden. Die Verlaufmittel können auch der Komponente A) in Mengen von 0,1 - 4 Gew.-%, vorzugsweise 0,2 - 2,0 Gew.-% zugesetzt werden.

Als Farbstoffe bzw. Pigmente, die anorganischer oder organischer Natur sein können, seien beispielsweise Titandioxid und Zinkoxid genannt. Die organischen Farbstoffe/Pigmente sind naturgemäß so auszuwählen, daß sie bei den Härtungstemperaturen stabil sind und zu keinen untolerierbaren Farbtonverschiebungen führen.

Geeignete Füllstoffe sind zum Beispiel Quarzmehl, Silikate, Kreide und Gips.

Die Stabilisatoren können auch aromatische Diketone wie Benzoin sein, die punktuelle Zersetzungen unterbinden und damit die Porenbildung herabdrücken. Diese werden im allgemeinen in Mengen von 0,1 bis 3, vorzugsweise von 0,2 bis 2 Gew.-%, bezogen auf das gesamte Bindemittelgemisch zugegeben.

Zur Vorbereitung der erfindungsgemäßen pulverförmigen Mischungen für die Prüfung, Verarbeitung und den praktischen Einsatz werden im allgemeinen die einzelnen Komponenten miteinander vermischt. Bei der Verwendung von flüssigen Bestandteilen werden die festen Komponenten fein gemahlen und die flüssigen Komponenten in diese eingemischt bis sie gleichmäßig verteilt sind. Zur Herstellung der erfindungsgemäßen, härtbaren Mischungen werden die Komponenten nach dem Mischen in der Schmelze homogenisiert. Dies kann in geeigneten Aggregaten, zum Beispiel beheizbaren Knetern, Doppel-Z-Mischern, Extrudern, vorzugsweise durch letztere, erfolgen, wobei die Extrusionstemperatur so zu wählen ist, daß ein Maximum an Scherkraft auf die Mischung einwirkt. Dabei sollte eine Temperaturobergrenze von 130 °C nicht überschritten werden. Bei Einsatz von Katalysatoren kann es zweckmäßig sein, diese den Komponenten A) oder B) zuzusetzen. Dies kann beispielsweise auch bei der Herstellung der Komponente A) erfolgen.

Die homogenisierte Masse wird dann nach Abkühlen auf Raumtemperatur und nach einer geeigneten Vorzerkleinerung zu einer härtbaren, pulverförmigen Mischung (Pulverlack) gemahlen, wobei je nach dem Verwendungszweck mittlere Teilchengrößen von ca. 40 bis 90 µm, vorzugsweise jedoch ca. 50 µm, angestrebt werden. Ein eventuell vorhandener Grobkornanteil von Teilchengröße von mehr als 90 µm wird durch Absieben entfernt.

Das Auftragen der so hergestellten Pulverlacke auf geeignete Substrate, wie zum Beispiel Metall, Holz, Glas, Beton, Kunststoff, Keramik etc., kann nach den bekannten Verfahren, zum Beispiel durch elektrostatisches Pulversprühen, Pulverapplikation mit dem Triboverfahren, Wirbelsintern, elektrostatisches Wirbelsintern sowie im Flammsprühverfahren erfolgen.

Nach dem Auftragen des Pulverlackes nach einem der genannten Verfahren werden die beschichteten Werkstücke zur Aushärtung auf eine Temperatur von 90 bis 270 °C, vorzugsweise 120 bis 220 °C, für eine zum Aushärten ausreichende Zeit, im allgemeinen 0,5 bis 60 Minuten, erhitzt. Die so erhaltenen Beschichtungen zeichnen sich durch gute lacktechnische Eigenschaften, wie gute mechanische Eigenschaften, gute chemische Beständigkeit, gute Wetterbeständigkeit und gute Haftung aus. Die erfindungsgemäßen Pulverlacke eignen sich daher insbesondere zum Beschichten von Materialien, wie zum Beispiel Metall, Glas und Keramik.

Darüber hinaus können die erfindungsgemäßen Mischungen auch als Klebstoff eingesetzt werden. Die Herstellung der Klebstofformulierungen erfolgt prinzipiell auf gleiche Weise wie bei den Pulverlackmischungen beschrieben. Das heißt, zunächst werden die Epoxid-Festharze (Komponente A) zerkleinert und danach mit dem Härter B innig miteinander vermischt, wobei für eine gleichmäßige Verteilung der Komponenten gesorgt wird.

Die so erhaltenen Formulierungen können gegebenenfalls mit üblichen, oben beschriebenen Zusätzen, wie Füllstoffen, Pigmenten, Farbstoffen u. a. versetzt werden. Die erfindungsgemäßen Mischungen können Verwendung finden zum Verkleben der mannigfaltigsten Werkstoffe, zum Beispiel Metalle, Leichtmetalle, aber auch nichtmetallische Werkstoffe wie Keramik, Glas, Leder, Gummi, Holz, Kunststoff u. a. mit sich selbst oder mit anderen Werkstoffen. Auch können sie zur Herstellung von Sandwichkonstruktionen aus Metallen und anderen Werkstoffen herangezogen werden.

Aufgrund ihrer hohen Reaktivität sind die erfindungsgemäßen Mischungen insbesondere als Klebe- und Beschichtungsmittel geeignet. Besonders hervorzuheben ist die Möglichkeit, Sandwichsysteme aus Holz (Spanplatten, Sperrholz u. a.) und Geweben, zum Beispiel aus Polyesterfasern (Trevira), aufzubauen. Das Gewebe wird bei dem Verklebungsprozeß komplett in das Bindemittelsystem eingebettet, bildet eine homogene Oberfläche und haftet optimal auf dem Untergrund. Der auf diese Weise erhaltene Verbundwerkstoff weist gegenüber blanken Span- oder Sperrholzplatten selbst bei geringeren Materialstärken eine hohe Durchbiegefestigkeit auf. Durch diese Arbeitsweise gelingt es, Platten mit geringerem Gewicht bei gleicher Qualität im Vergleich zu Standardmaterialien herzustellen.

Im Fall der Verwendung der erfindungsgemäßen Mischungen für Verklebungen, kann die Applikation auf elektrostatischem Wege, z. B. mit einer elektrostatischen Pulversprühpistole, erfolgen. Auf diese Weise ist es möglich, gleichmäßig dünne Schichten (zum Beispiel auf Folien) aufzutragen. Durch die schnelle Reaktion der Einzelkomponenten der erfindungsgemäßen Mischungen bei niedrigen Temperaturen, können auch hohe Fabrikationsdurchsatzraten erreicht werden.

Ein herausragender Vorteil ist dabei, daß Vergilbungen, Verbrennungen und das Ausgasen vermieden werden können. Die Aushärtung der pulverförmigen Mischung auf den beschichteten Materialien erfolgt im allgemeinen bei Temperaturen von 120 bis 220 °C, vorzugsweise von 130 bis 210 °C, in einer ausreichenden Zeit von 2 bis 60 Minuten.

### Epoxidharz I (Vergleich)

Handelsübliches Bisphenol-A-Epoxidharz für die Herstellung von Pulverlacken mit folgenden Kennzahlen:

| | |
|---|---|
| Epoxidäquivalent | ca. 800 |
| Viskosität 25 °C 40%ig in Butyldiglykol n. DIN 53 015 | ca. 500 mPa.s |
| Schmelzpunkt Kapillarmethode nach DIN 53 015 | ca. 70 °C |
| Glasübergangstemperatur | ca. 50 °C |

### Epoxidharz II (erfindungsgemäß)

### Herstellung

1552 g eines flüssigen Bisphenol-A-Epoxidharzes mit einem Epoxidäquivalent von 183 (8,48 Val) und 352 g Terephthalsäure (4,24 Val) wurden in einem Vierhalskolben unter Rühren und Stickstoffatmosphäre auf 170 °C erwärmt, mit 2 g Triethanolamin versetzt und weiter bei 170 °C gehalten. Nach 4 Stunden lag die Säurezahl bei 0,6 mgKOH/g und das Epoxidäquivalent bei 459. Nun wurde das Reaktionsprodukt bei 140 °C gekühlt und 97 g Tetrahydrophthalsäureanhydrid (0,64 Mol) zugegeben. Die Temperatur wurde weiter bei 140 °C gehalten. Die Säurezahl betrug nach 1,5 Stunden 1,4 mgKOH/g. Nach einer weiteren Stunde wurde die Umsetzung durch Entleeren des Kolbens beendet.

### Kenndaten:

| | |
|---|---|
| Epoxidäquivalent | 582 |
| Säurezahl (Toluol/Ethanol) | 0,5 mgKOH/g |
| Viskosität 25 °C (40 % in Butyldiglykol) | 541 mPa.s |
| Glasübergangstemperatur | 43,4 °C |

### Epoxidharz III (erfindungsgemäß)

### Herstellung

1549 g eines flüssigen Bisphenol-A-Epoxidharzes mit einem Epoxidäquivalent von 183 (8,46 Val) und 448 g Terephthalsäure (5,39 Val) wurden in einem Vierhalskolben unter Rühren und Stickstoffatmosphäre auf 170 °C erwärmt, mit 2 g Triethanolamin versetzt und weiter bei 170 °C gehalten. Nach 7 Stunden lag die Säurezahl bei 0,6 mgKOH/g. Nach einer weiteren Stunde wurde die Umsetzung durch Entleeren des Kolbens beendet.

### Kenndaten:

| | |
|---|---|
| Epoxidäquivalent | 688 |
| Säurezahl (Toluol/Ethanol) | 0,3 mgKOH/g |
| Viskosität 25 °C (40 % in Butyldiglycol) | 443 mPa.s |
| Glasübergangstemperatur | 49,9 °C |

### Beispiel 1

### Gelzeitbestimmung

Die Gelzeit wurde nach DIN 16 916 Teil 2 (September 1987) Abschnitt 5.7.1. Bestimmung der B-Zeit bei 180 °C gemessen. Die Ergebnisse verschiedener erfindungsgemäßer Mischungen im Vergleich zu solchen nach dem Stand der Technik sind in Tabelle 1 und 2 zusammengefaßt.

Die erfindungsgemäßen pulverförmigen Mischungen zeigen überraschend kurze Gelzeiten gegenüber den Mischungen mit einem Epoxidharz nach dem Stand der Technik. Dies ist ein Maß für die hohe Reaktivität der erfindungsgemäßen verwendeten Mischungen und demonstriert den großen Einfluß der Epoxidharz-Komponente A auf die Reaktionsgeschwindigkeit des Gesamtsystems.

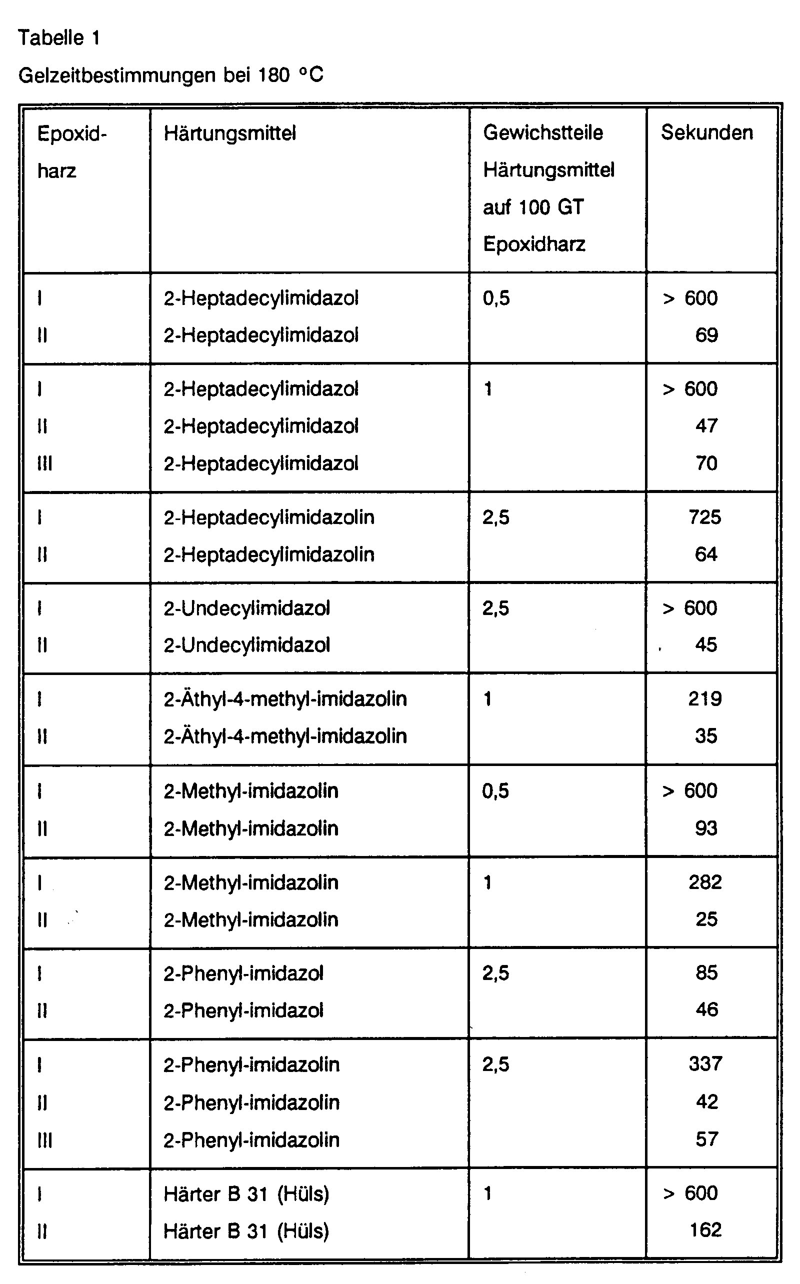

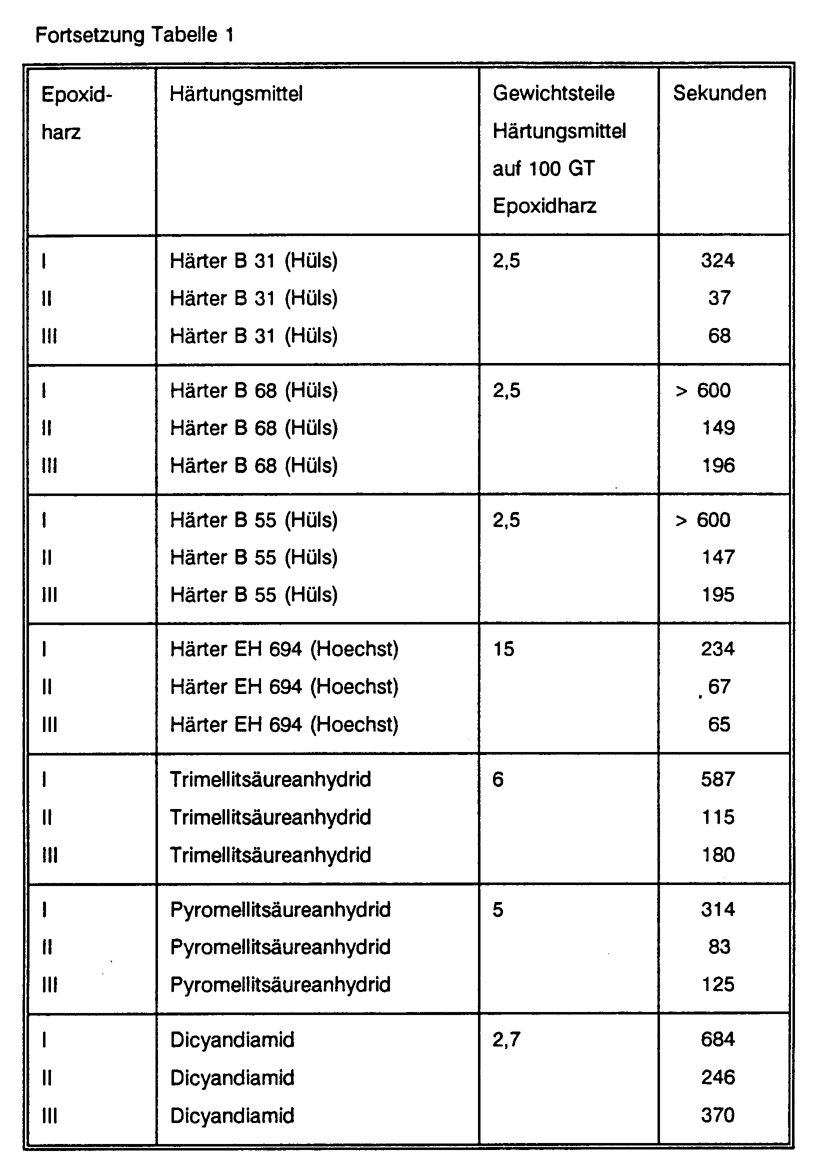

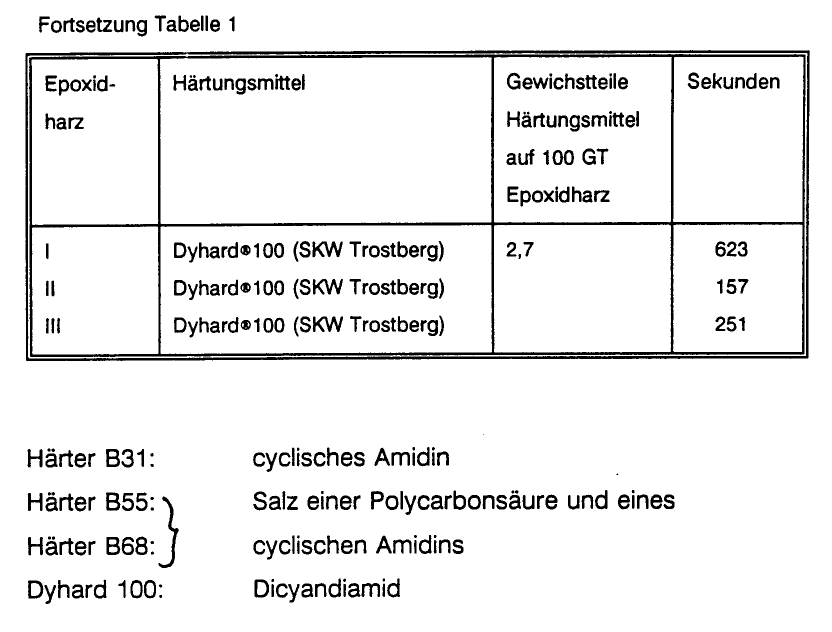

### Beispiel 2

92 Gewichtsteile des Epoxidharzes II und 8 Gewichtsteile des Härters B 31 (cyclisches Amidin der Hüls Aktiengesellschaft) wurden in einem MTI-Mischer auf < 5 mm Korngröße gemischt und bei 80 °C mit einer Verweilzeit von 10 - 15 Sekunden extrudiert und das schmelzflüssige Bindemittel-Härter-Gemisch direkt nach der Dispergierung im Extruder zusammen mit dem Trevira-Gewebe durch einen Kalander geführt, wobei sich das schmelzflüssige Material gleichmäßig auf dem Gewebe verteilte.

Das beschichtete Gewebe wurde bis zu seiner weiteren Verarbeitung bzw. Verklebung bei Umgebungstemperatur zwischengelagert.

Die mit der Pulvermischung ausgerüsteten Gewebe wurden gestanzt, geschnitten und anschließend unter Druck (40 bar) in 40 Sekunden bei 200 °C mit Spanplatten verklebt. Durch die gewählten Verfahrensbedingungen schmilzt das Pulvergemisch auf, benetzt das Substrat (Spanplatte und Gewebe) sehr gut und härtet danach aus. Dabei wird das Trevira-Gewebe komplett in das Bindemittelsystem eingebettet, bildet eine homogene Oberfläche und haftet optimal auf dem Untergrund.

### Beispiel 3

92 Gewichtsteile des Epoxidharzes II und 8 Gewichtsteile des Härters B 31 (cyclisches Amidin der Hüls Aktiengesellschaft) wurden in einem MTI-Mischer auf < 5 mm Korngröße gemischt und bei 80 °C mit einer Verweilzeit von 10 - 15 Sekunden extrudiert. Das mit 100 °C austretende Extrudat wurde abgekühlt, gebrochen, gemahlen und auf eine Korngröße < 125 µm gesiebt.

Die auf diese Weise erhaltene Pulvermischung wurde mittels einer elektrostatischen Pulversprühpistole auf Trevira-Gewebe appliziert und das beschichtete Material weiterverarbeitet, indem entweder
a) das mit dem Pulvergemisch versehene Trevira-Gewebe sofort auf zu kaschierende Spanplatten verpreßt und verklebt oder
b) das Pulvergemisch 2 Minuten bei 100 °C an das Trevira-Gewebe angeschmolzen, zwischengelagert und danach mit Spanplatten verklebt wurde.

Die Verklebung der auf diese Weise ausgerüsteten Gewebe erfolgte unter Druck (40 bar) in 40 Sekunden bei 200 °C auf Spanplatten. Durch die gewählten Verfahrensbedingungen schmilzt das Pulvergemisch auf, benetzt das Substrat (Spanplatte und Gewebe) sehr gut und härtet danach aus.

## Patentansprüche

1. Härtbare pulverförmige Mischungen enthaltend
A) ein Epoxidharz mit einer zahlenmittleren molaren Masse ***M***ₙ von 500 bis 10 000 g/mol und einer Glasübergangstemperatur von mindestens 20 °C, erhältlich durch Umsetzung von
A1) aromatischen Verbindungen mit mindestens zwei 1,2-Epoxidgruppen pro Molekül und Epoxid-Äquivalentgewichten von 160 bis 600, und
A2) aromatischen Dicarbonsäuren oder deren Mischung mit Verbindungen aus der Gruppe der (cyclo-)aliphatischen Dicarbonsäuren, Monocarbonsäuren und/oder einwertigen Phenolen, und gegebenenfalls
A3) cyclischen Anhydriden, und
B) einen Härter, wobei Carboxylgruppen enthaltende Polyester als Härter ausgenommen sind.

2. Härtbare, pulverförmige Mischungen nach Anspruch 1, dadurch gekennzeichnet, daß sie als Härter B) eine Verbindung der Formeln I oder II enthalten, 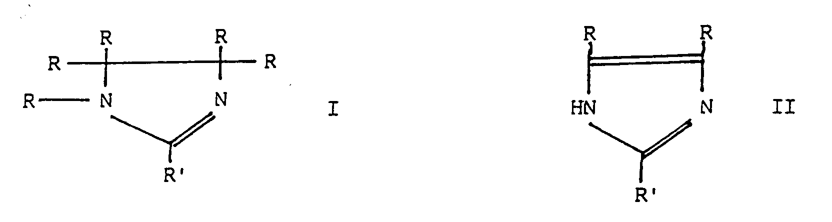 worin R unabhängig voneinander Wasserstoff oder ein Alkyl-, Aryl-, Aralkyl-, Cycloalkyl- oder heterocyclischen Rest, R' gleich R oder ein Alkylen- oder Arylen-Rest, der gegebenenfalls mit einem oder mehreren Alkyl-, Aryl-, Aralkyl-, Cycloalkyl- oder heterocyclischen Resten substituiert sein kann und wobei mehrere Reste, gegebenenfalls auch durch Heteroatome verbunden sein können, bedeuten.

3. Härtbare Mischungen nach Anspruch 1, dadurch gekennzeichnet, daß als Komponente B) 2-Phenylimidazolin eingesetzt wird.

4. Härtbare Mischungen nach Anspruch 1, dadurch gekennzeichnet, daß die Menge an Härter B) 0,01 bis 60 Gew.-%, bezogen auf die Summe von A) und B), beträgt.

5. Härtbare Mischungen nach mindestens einem der Ansprüche 1 bis 4, dadurch gekennzeichnet, daß die Komponente A) ein Epoxidäquivalentgewicht von 300 bis 1200 aufweist.

6. Härtbare Mischungen nach mindestens einem der Ansprüche 1 bis 5, dadurch gekennzeichnet, daß die Komponente A) eine Säurezahl von 0,01 bis 20 mgKOH/g besitzt.

7. Härtbare Mischungen nach mindestens einem der Ansprüche 1 bis 6, dadurch gekennzeichnet, daß die Glasübergangstemperatur der Komponente A) mindestens 35 °C beträgt.

8. Härtbare Mischungen aus mindestens einem der Ansprüche 1 bis 7, dadurch gekennzeichnet, daß die Reaktionskomponente A1) Epoxidäquivalentgewichte von 160 bis 200 aufweist.

9. Härtbare Mischungen nach mindestens einem der Ansprüche 1 bis 8, dadurch gekennzeichnet, daß die Reaktionskomponente A2) als aromatische Dicarbonsäure Terephthalsäure enthalt.

10. Härtbare Mischungen nach mindestens einem der Ansprüche 1 bis 9, dadurch gekennzeichnet, daß als (cyclo)aliphatische Carbonsäuren in der Reaktionskomponente A2) solche mit 2 bis 12, vorzugsweise 6 bis 8 C-Atomen eingesetzt werden.

11. Härtbare Mischungen nach mindestens einem der Ansprüche 1 bis 10, dadurch gekennzeichnet, daß pro Mol Reaktionsprodukt aus A1) und A2) 0,01 bis 1 Mol cyclisches Anhydrid A3) eingesetzt werden.

12. Härtbare Mischungen nach mindestens einem der Ansprüche 1 bis 11, dadurch gekennzeichnet, daß als cyclische Anhydride A3) solche aus der Gruppe Bernsteinsäureanhydrid, Phthalsäureanhydrid, Δ⁴-Tetrahydrophthalsäureanhydrid und Hexahydrophthalsäureanhydrid eingesetzt werden.

13. Härtbare Mischungen nach mindestens einem der Ansprüche 1 bis 12, dadurch gekennzeichnet, daß sie übliche Zusatzstoffe enthalten.

14. Substrat, beschichtet mit einem Überzug, der durch Aushärten einer Mischung nach mindestens einem der Ansprüche 1 bis 12 erhalten wird.

## Claims

1. A curable pulverulent mixture comprising
A) an epoxy resin having a number average molar mass Mₙ of from 500 to 10,000 g/mol and a glass transition temperature of at least 20°C, obtainable by reaction of
A1) an aromatic compound having at least two 1,2-epoxide groups per molecule and an epoxide equivalent weight of from 160 to 600, and
A2) an aromatic dicarboxylic acid or mixture thereof with a compound from the group consisting of (cyclo)aliphatic dicarboxylic acids, monocarboxylic acids and/or monohydric phenols, and, if desired,
A3) a cyclic anhydride, and
B) a curing agent, polyesters containing carboxyl groups being excluded as curing agents.

2. A curable pulverulent mixture as claimed in claim 1, which comprises as curing agent B) a compound of formula I or II 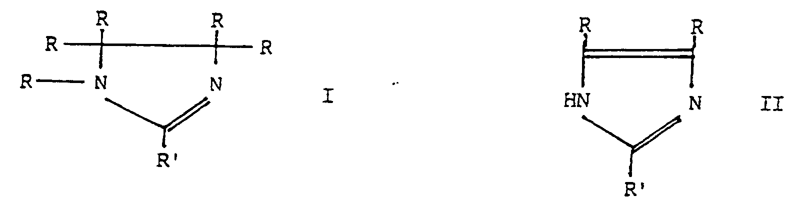 in which each R, independently of the others, is hydrogen or an alkyl, aryl, aralkyl, cycloalkyl or heterocyclic radical, R' is the same as R or is an alkylene or arylene radical which may possibly be substituted by one or more alkyl, aryl, aralkyl, cycloalkyl or heterocyclic radicals, and where two or more radicals may be connected, possibly also by heteroatoms.

3. A curable mixture as claimed in claim 1, wherein 2-phenylimidazoline is employed as component B).

4. A curable mixture as claimed in claim 1, wherein the quantity of curing agent B) is from 0.01 to 60% by weight, based on the sum of A) and B).

5. A curable mixture as claimed in at least one of claims 1 to 4, wherein component A) has an epoxide equivalent weight of from 300 to 1,200.

6. A curable mixture as claimed in at least one of claims 1 to 5, wherein component A) possesses an acid number of from 0.01 to 20 mg of KOH/g.

7. A curable mixture as claimed in at least one of claims 1 to 6, wherein the glass transition temperature of component A) is at least 35°C.

8. A curable mixture as claimed in at least one of claims 1 to 7, wherein reaction component A1) has an epoxide equivalent weight of from 160 to 200.

9. A curable mixture as claimed in at least one of claims 1 to 8, wherein reaction component A2) comprises terephthalic acid as aromatic dicarboxylic acid.

10. A curable mixture as claimed in at least one of claims 1 to 9, wherein the (cyclo)aliphatic carboxylic acid employed in reaction component A2) is one having from 2 to 12 and preferably from 6 to 8 carbon atoms.

11. A curable mixture as claimed in at least one of claims 1 to 10, wherein from 0.01 to 1 mol of cyclic anhydride A3) is employed per mol of reaction product of A1) and A2).

12. A curable mixture as claimed in at least one of claims 1 to 11, wherein the cyclic anhydride A3) employed is one from the group consisting of succinic anhydride, phthalic anhydride, Δ⁴-tetrahydrophthalic anhydride and hexahydrophthalic anhydride.

13. A curable mixture as claimed in at least one of claims 1 to 12, which comprises conventional additives.

14. A substrate coated with a coating which is obtained by fully curing a mixture as claimed in at least one of claims 1 to 12.

## Revendications

1. Mélanges pulvérulents, durcissables contenant
A) une résine époxy ayant une masse molaire moyenne en nombre ***M***_{***n***} de 500 à 10 000 g/mol et une température de transition vitreuse d'au moins 20°C, qui peut être obtenue par réaction
A1) de composés aromatiques ayant au moins deux groupes 1,2-époxy par molécule et des poids d'équivalent époxy de 160 à 600, et
A2) d'acides dicarboxyliques aromatiques ou leur mélange avec des composés du groupe des acides dicarboxyliques, acides monocarboxyliques (cyclo)aliphatiques et/ou monophénols, et éventuellement
A3) d'anhydrides cycliques, et
B) un durcisseur, les polyesters contenant des groupes carboxyles étant exclus en tant que durcisseurs.

2. Mélanges pulvérulents, durcissables selon la revendication 1, caractérisés en ce qu'ils contiennent comme durcisseur B) un composé de formule I ou II 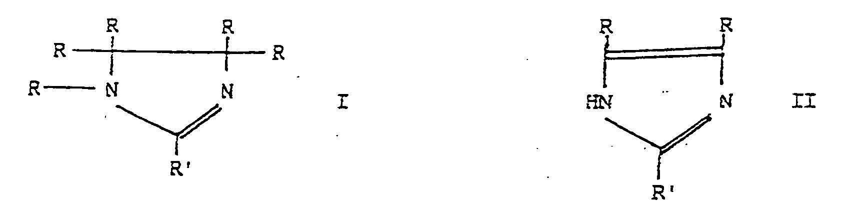 où
- les R, indépendamment les uns des autres, représentent l'hydrogène ou un radical alkyle, aryle, aralkyle, cycloalkyle ou hétérocyclique,
- R' a la même signification que R ou représente un radical alkylène ou arylène qui peut être éventuellement substitué par un ou plusieurs radicaux alkyle, aryle, aralkyle, cycloalkyle ou hétérocyclique et plusieurs radicaux pouvant être reliés éventuellement aussi par des hétéroatomes.

3. Mélanges durcissables selon la revendication 1, caractérises en ce que la 2-phénylimidazoline est utilisée comme composant B).

4. Mélanges durcissables selon la revendication 1, caractérises en ce que la quantité de durcisseur B) est de 0,01 à 60 % en poids, par rapport à la somme de A) et B).

5. Mélanges durcissables selon au moins l'une des revendications 1 à 4, caractérisés en ce que le composant A) présente un poids d'équivalent d'époxy de 300 à 1200.

6. Mélanges durcissables selon au moins l'une des revendications 1 à 5, caractérisés en ce que le composant A) possède un indice d'acide de 0,01 à 20 mg de KOH/g.

7. Mélanges durcissables selon au moins l'une des revendications 1 à 6, caractérisés en ce que la température de transition vitreuse du composant A) est d'au moins 35°C.

8. Mélanges durcissables selon au moins l'une des revendications 1 à 7, caractérisés en ce que le composant de réaction A1) présente un poids d'équivalent d'époxy de 160 à 200.

9. Mélanges durcissables selon au moins l'une des revendications 1 à 8, caractérisés en ce que le composant de réaction A2) contient de l'acide téréphtalique en tant qu'acide dicarboxylique aromatique.

10. Mélanges durcissables selon au moins l'une des revendications 1 à 9, caractérisés en ce qu'il est utilisé, en tant qu'acides carboxyliques (cyclo)aliphatiques dans le composant de réaction A2), des acides de ce type avec 2 à 12, de préférence 6 à 8 atomes de C.

11. Mélanges durcissables selon au moins l'une des revendications 1 à 10, caractérisés en ce qu'il est utilisé, par mol de produit de réaction provenant de A1) et A2), 0,01 à 1 mol d'anhydride cyclique A3).

12. Mélanges durcissables selon au moins l'une des revendications 1 à 11, caractérisés en ce qu'il est utilisé, en tant qu'anhydrides cycliques A3) des anhydrides du groupe de l'anhydride succinique, l'anhydride phtalique, l'anhydride Δ⁴-tétrahydrophtalique et l'anhydrique hexahydrophtalique.

13. Mélanges durcissabies selon au moins l'une des revendications 1 à 12, caractérisés en ce qu'ils contiennent des additifs usuels.

14. Substrat enduit d'un revêtement qui est obtenu par durcissement d'un mélange selon au moins l'une des revendications 1 à 12.
